(19) Europäisches Patentamt
European Patent Office
Office européen des brevets

(11) **EP 0 618 437 B1**

(12) **EUROPÄISCHE PATENTSCHRIFT**

(45) Veröffentlichungstag und Bekanntmachung des Hinweises auf die Patenterteilung:
**13.01.1999 Patentblatt 1999/02**

(51) Int Cl.$^6$: **G01N 9/02**, H01M 4/04

(21) Anmeldenummer: **94104533.8**

(22) Anmeldetag: **22.03.1994**

(54) **Verfahren und Vorrichtung zur Bestimmung wenigstens eines physikalischen Parameters von Akkumulator-Elektrodenplatten**

Method and device for determining at least one physical parameter of accumulator electrodes

Méthode et dispositif pour la détermination d'au moins un paramètre physique d'électrodes d'accumulateurs

(84) Benannte Vertragsstaaten:
**AT BE CH DE ES FR GB IT LI PT SE**

(30) Priorität: **31.03.1993 DE 4310541**

(43) Veröffentlichungstag der Anmeldung:
**05.10.1994 Patentblatt 1994/40**

(73) Patentinhaber: **HAGEN BATTERIE AG**
**D-59494 Soest (DE)**

(72) Erfinder:
• **Wagner, Rainer, Dr.**
**D-44229 Dortmund (DE)**
• **Scharf, Peter**
**D-59494 Soest (DE)**
• **Nann, Eberhard, Dr.**
**D-59494 Soest-Deiringsen (DE)**

(74) Vertreter: **Manitz, Finsterwald & Partner**
**Robert-Koch-Strasse 1**
**80538 München (DE)**

(56) Entgegenhaltungen:
DE-A- 3 237 090          DE-A- 3 826 516
US-A- 3 360 994          US-A- 3 871 489

• JOURNAL OF POWER SOURCES, MARCH 1979, SWITZERLAND, VOL. 4, NR. 1, PAGE(S) 43 - 51, ISSN 0378-7753 Micka K et al 'Study of structural factors of lead-acid battery electrodes'
• BATTERIEN, Bd.11, Nr.6-11, 1943, BERLIN, DE Seiten 207 - 229 C. DROTSCHMANN 'Porositätsmessungen'
• JOURNAL OF THE ELECTROCHEMICAL SOCIETY, OCT. 1992, USA, VOL. 139, NR. 10, PAGE(S) 2727 - 2736, ISSN 0013-4651 DESILVESTRO J ET AL 'In situ determination of gravimetric and volumetric charge densities of battery electrodes. Polyaniline in aqueous and nonaqueous electrolytes'
• JOURNAL OF THE ELECTROCHEMICAL SOCIETY, Bd.111, Nr.10, 1964, MANCHESTER, NEW HAMPSHIRE US Seiten 1167 - 1169 A.J. SCHRIJNER ET AL. 'Determination of the density of Ta, Nb and anodically formed Ta2O5 and Nb2O5'

**Beschreibung**

Die Erfindung betrifft ein Verfahren und eine Vorrichtung zur Bestimmung wenigstens eines physikalischen Parameters, wie die wahre Plattendicke, Scheindichte, die wahre Dichte, das Porenvolumen und/oder die Porosität, und/oder die Porenstruktur von Akkumulator-Elektrodenplatten.

In vliesgebundenen, rekombinationsfähigen Blei-Schwefelsäure-Akkumulatoren werden ebenso wie in herkömmlichen Blei-Schwefelsäure-Akkumulatoren positive und negative Elektrodenplatten verwendet, die im wesentlichen aus einem Metallgitter, das als Masseträger und zur Ableitung des elektrischen Stromes dient, und aus der positiven oder negativen aktiven Masse bestehen. Zur Erzielung hoher Kapazitäten und/oder hoher Entladeströme ist eine große Kontaktfläche zwischen der aktiven Masse, die auf der positiven Seite aus Bleidioxid und auf der negativen Seite aus Blei besteht, und der als Elektrolyt dienenden Schwefelsäure notwendig, da die allgemein bekannten elektrochemischen Reaktionen in dem Blei-Schwefelsäure-Akkumulator im wesentlichen an dieser Kontaktfläche stattfinden. Aus diesem Grund müssen die aktiven Massen eine poröse Struktur besitzen.

Weiterhin muß beachtet werden, daß die Schwefelsäure bei einer Entladung des Akkumulators selbst an den ablaufenden elektrochemischen Reaktionen beteiligt ist und dabei verbraucht wird. Somit sind die Hohlräume in den aktiven Massen auch als Speicherraum für die während einer Entladung benötigte Schwefelsäuremenge von Bedeutung.

Darüber hinaus besitzt das während einer Entladung sowohl an der positiven als auch an der negativen Platte gebildete Bleisulfat ein größeres Volumen als die Ausgangsstoffe, so daß eine Verringerung des Porenraumes während der Entladung eintritt. Dies ist sehr nachteilig für den Transport weiterer Schwefelsäure aus dem Raum zwischen den Elektrodenplatten in die Elektrodenplatten hinein. Aus diesen Gründen müssen die aktiven Massen eine geeignete poröse Struktur aufweisen, d. h., daß der Anteil an Hohlräumen am Gesamtvolumen der aktiven Masse einen bestimmten Wert erreichen bzw. die Scheindichte und die wahre Dichte der aktiven Masse ein bestimmtes Verhältnis aufweisen müssen, um alle mit den elektrochemischen Reaktionen gekoppelten Transportvorgänge in der erforderlichen Geschwindigkeit ablaufen zu lassen.

Unter Scheindichte ist dabei der Quotient aus dem Gewicht der Masse und deren Gesamtvolumen einschließlich des Porenvolumens zu verstehen. Die wahre Dichte der Masse ergibt sich dadurch, daß man deren Gewicht durch das Gesamtvolumen abzüglich des Porenvolumens dividiert.

Bei der Herstellung der aktiven Masse von positiven und negativen Akkumulator-Elektrodenplatten ist es daher von großer Bedeutung eine optimale poröse Struktur zu erzeugen. Optimale Struktur bedeutet dabei, daß der Anteil an Hohlräumen in der aktiven Masse zwar relativ groß sein sollte, aber auch nicht zu groß wird, weil sonst die Lebensdauer der Elektrodenplatten verringert wird.

In Rekombinationsbatterien mit Glasvliesseparatoren kommt dem Säurefüllgrad des Separators eine entscheidende Bedeutung für die Funktionsfähigkeit des Akkumulators zu. Daher müssen die Plattendicken exakt den Vorgabewerten entsprechen, um den Satzpreßdruck und das freie Porenvolumen des Separators konstant zu halten. Es ist dabei besonders wichtig, daß die wahre Plattendicke ermittelt wird, d. h. die Dicke, die sich aus dem wahren Volumen bei Berücksichtigung aller Plattenunebenheiten wie z. B. oberflächlicher Risse ergibt.

Es gibt eine Vielzahl von Parametern, die im Verlauf des Herstellungsprozesses die spätere Aktivmassenstruktur sowie die Plattendicken beeinflussen. Die wichtigsten sind die Rezeptur sowie die Bedingungen bei der Herstellung der feuchten Pasten und bei der Einbringung in das Gittermaterial sowie die Parameter bei Reifung, Trocknung und Formation der Platten.

Zur Ermittlung der Plattenstärken sind zahlreiche Methoden bekannt. Eine sehr einfache Methode besteht in der manuellen Messung mit Hilfe einer Schieblehre oder mit Hilfe eines anderen mechanischen Dickenmeßgerätes.

Es ist auch schon bekannt (DE 38 26 516 Al) eine Laserdickenmeßeinrichtung zur Bestimmung der Dicke von frisch pastierten Elektrodenplatten zu verwenden, was jedoch mit einem hohen technischen Aufwand verbunden ist.

All diesen bekannten Methoden ist der Nachteil gemeinsam, daß als Meßergebnis für die Plattendicke nicht die für insbesondere Rekombinationsbatterien wichtige wahre Plattenstärke, sondern eine zu große Plattenstärke erhalten wird. Der Grund hierfür ist die rauhe und unregelmäßige Oberfläche der Elektrodenplatten, welche dazu führt, daß bei der Dickenmessung die Erhöhungen der Oberfläche eine bevorzugte Rolle spielen.

Die herkömmlichen Meßmethoden erlauben auch keine Aussage zur Struktur der aktiven Masse.

Aufgrund der Aufwendigkeit und Ungenauigkeit der bekannten Meßmethoden werden heutzutage Untersuchungen der porösen Struktur der aktiven Masse während der Herstellung der Elektrodenplatten zur Überwachung der Fertigungsschritte nicht durchgeführt. Die bekannten Meßmethoden sind also nicht als Fertigungskontrolle und Fertigungsregelgröße einsetzbar.

Zur Charakterisierung von porösen Festkörpern hinsichtlich des Anteils der Hohlräume am Gesamtkörper und deren Struktur sind Methoden wie die Quecksilberporosimetrie oder die Porositätsmessungen nach den folgenden Literaturstellen bekannt: Drotschmann, C. Bleiakkumulatoren, Weinheim 1951, Seite 132; Drotschmann, C. Batterien 11 (1943), Seiten 207 - 229; Manegold, E. Kolloid-Z. 81 (1937); Samsonov, P.D. Kuznezova, N.G., J. angew. Chem. <u>4</u> (1941), Seite 318.

Dabei handelt es sich ausnahmslos um Labormethoden, die sich prinzipiell nicht zur Fertigungsüberwachung eignen, da sie einen hohen apparativen und zeitlichen Aufwand und darüber hinaus den Einsatz von qualifiziertem Personal erfordern.

So wird bei der Quecksilberporosimetrie das Eindringen einer nicht benetzenden Flüssigkeit in dem porösen Körper in Abhängigkeit vom Flüssigkeitsdruck gemessen und daraus auf Größe und Verteilung der Porenräume geschlossen. Die Methode erfordert wegen des Einsatzes einer Hochdruckapparatur erheblichen Aufwand. Die Untersuchungen können außerdem nur von speziell geschultem Personal durchgeführt werden und sind bei negativer aktiver Masse nicht ohne weiteres anwendbar. Die Verdrängungsmethoden, bei denen man die Menge von den in den porösen Problekörpern eingedrungener Flüssigkeit mißt und das Volumen des flüssigkeitsgefüllten Gesamtkörpers durch Auftriebsmessung ermittelt, sind ebenfalls recht aufwendig und darüber hinaus beträgt die Analysenzeit mindestens 24 Stunden.

Außerdem haben die bisher bekannten Methoden den Nachteil, Meßflüssigkeiten zu verwenden, die andere physikalische Eigenschaften beispielsweise eine andere Oberflächenspannung als Schwefelsäure aufweisen und daher andere Porenräume einnehmen als Schwefelsäure.

Die US-A-3360994 beschreibt ein klassisches pyknometrisches Verfahren, bei dem zur Bestimmung des spezifischen Gewichts von Festkörpern ein Waagebalken und Gegengewichte verwendet werden, welche die Waage ins Gleichgewicht bringen, sobald das gewünschte Probengewicht in einem Behälter auf der Waage angeordnet ist. Nachdem der Behälter mit der Probe bis auf ein genaues Volumen mit Wasser gefüllt ist, werden größere und kleinere Gewichte zu Markierungen bewegt, die in geeigneter Weise auf dem Waagebalken angeordnet sind, um das spezifische Gewicht der Probe anzuzeigen.

Die Aufgabe der Erfindung besteht darin, ein Verfahren und eine Vorrichtung zu schaffen, mit denen eine automatische Bestimmung der mechanischen Parameter, insbesondere der Struktur der aktiven Masse und der wahren Plattendicke von Akkumulator-Elektrodenplatten möglich ist. Die automatische Bestimmung soll während des Akkumulator-Fertigungsprozesses durchführbar und zu dessen Steuerung einsetzbar sein. Insbesondere sollen sich das erfindungsgemäße Verfahren und die erfindungsgemäße Vorrichtung bei der Fertigung von Rekombinationsakkumulatoren eignen.

Zur Lösung dieser Aufgabe sind die Merkmale des Patentanspruchs 1 vorgesehen.

Der Erfindungsgedanke ist also darin zu sehen, daß durch die im Anspruch 1 beschriebenen Wägungen und Verfahrensschritte das Gewicht einer gedanklich anstelle der realen Elektrodenplatte gesetzten Platte mit der Dichte der Meßflüssigkeit bestimmt wird, die die gleiche Fläche wie die reale Elektrodenplatte aufweist, jedoch eine gleichmäßige Dicke, die mit der wahren, d.h. mittleren Plattendicke der Elektrodenplatte übereinstimmt.

Mit der Erfindung kann die wahre Plattendicke auch von Elektrodenplatten bestimmt werden, deren Poren ganz oder teilweise mit Flüssigkeit bereits gefüllt sind, wie es nach dem Pastieren oder Vortrocknen der Fall ist.

Wird die Erfindung jedoch für Elektrodenplatten in trockenem Zustand verwendet, so wird nach Anspruch 2 vorgegangen.

Mittels dieses Gewichtes kann dann gemäß Anspruch 3 sehr genau die wahre Plattendicke bestimmt werden.

Um das Gewicht der aktiven Masse ebenfalls bestimmen zu können, wird gemäß Anspruch 4 vorgegangen.

So kann dann gemäß Anspruch 5 die scheinbare Dichte der aktiven Masse bestimmt werden.

Anspruch 6 gibt an, wie durch geeignete Differenzbildung der Meßwerte das Porenvolumen genau bestimmt wird.

Die wahre Dichte kann man dann nach Anspruch 7 ermitteln.

Eine Bestimmungsmöglichkeit für die Porosität gemäß der vorliegenden Erfindung offenbart Anspruch 8.

Zur Ermittlung der Porenstruktur kann nach Anspruch 9 vorgegangen werden.

Sämtliche erfindungsgemäßen Verfahrensschritte eignen sich besonders zur Ausführung durch eine Steuerelektronik gemäß Anspruch 10.

Von besonderer Bedeutung ist es, daß gemäß Anspruch 11 die verwendete Flüssigkeit dem Elektrolyten physikalisch und/ oder chemisch ähnlich ist. Die Meßflüssigkeiten sollen also insbesondere eine gleiche oder ähnliche Oberflächenspannung wie der später verwendete Elektrolyt, z. B. die Schwefelsäure aufweisen, damit die Meßflüssigkeit die Poren der aktiven Masse in der gleichen Weise wie der Elektrolyt ausfüllt. Das wahre Porenvolumen gemäß Anspruch 5 kann nur ermittelt werden, wenn die Meßflüssigkeit physikalische Eigenschaften hat, die denen des Akkumulatorelektrolyten z.B. Schwefelsäure nahekommen.

Bei Verwendung von Schwefelsäure als Elektrolyt ist die Ausbildung nach Anspruch 12 eine Möglichkeit, zu einer exakten Bestimmung des Porenvolumens zu gelangen.

Die bevorzugte Anwendungsmöglichkeit für das erfindungsgemäße Verfahren zeigt Anspruch 13.

Anspruch 14 definiert die bevorzugte Verwendung der erfindungsgemäß bestimmten Parameter.

Eine besonders bevorzugte Vorrichtung zur Ausführung des erfindungsgemäßen Verfahrens ist durch Anspruch 15 gekennzeichnet.

Die Erfindung wird im folgenden beispielsweise anhand der Zeichnung beschrieben; in dieser zeigt

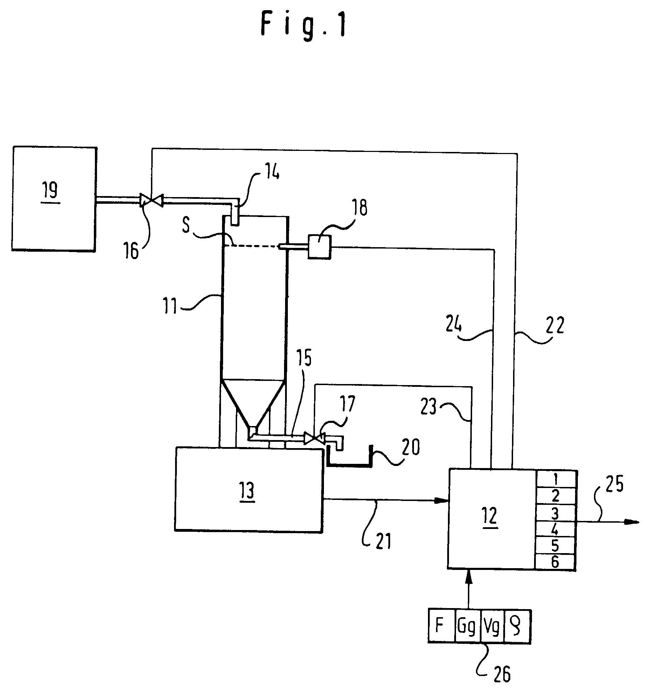

Figur 1 eine schematische Wiedergabe einer für die Ausführung des erfindungsgemäßen Verfahrens geeigneten Vorrichtung nach Art eines Blockschaltbildes.

Nach Figur 1 besteht die Vorrichtung aus einer Waage 13, auf der ein Behälter 11 zur Aufnahme von Akkumulator-Elektrodenplatten angeordnet ist. Am oberen Ende des Behälters 11 mündet eine Flüssigkeitszufuhrleitung 14, die über ein Magnetventil 16 an einen Flüssigkeitsvorratsbehälter 19 angeschlossen ist.

Am unteren Ende des Behälters 11 zweigt eine Flüssigkeitsabfuhrleitung 15 ab, in die ein Magnetventil 17 eingeschaltet ist. Durch die Flüssigkeitabfuhrleitung 15 kann im Behälter 11 befindliche Flüssigkeit durch Öffnen des Magnetventils 17 in einen Sammelbehälter 20 abgelassen werden, der nach Füllung zum Nachfüllen von Flüssigkeit in den Vorratsbehälter 19 entleert werden kann. Die im Vorratsbehälter 19 befindliche Meßflüssigkeit kann also mehrfach verwendet werden.

Im oberen Bereich des Behälters 11 ist ein Flüssigkeitsschalter 18 angeordnet, der auf einen Sollflüssigkeitsstand S im Behälter 11 anspricht.

Am Ausgang der Waage 13 erscheint ein für das Gewicht des Behälters 11 mit Inhalt repräsentatives elektrisches Signal, welches über eine Leitung 21 an eine Steuerelektronik 12 angelegt ist. Die Steuerelektronik 12 ist außerdem über Leitungen 22, 23, 24 mit dem Magnetventil 16, dem Magnetventil 17 bzw. dem Flüssigkeitsstandschalter 18 verbunden.

Am Ausgang 25 der Steuerelektronik 12 wird ein Ausgangssignal abgegeben, das durch die gemäß der Erfindung vorgenommenen Wägungen und Berechnungen gebildet und zur Steuerung des Fertigungsablaufs beim Herstellen der Akkumulator-Elektrodenplatten verwendet wird.

Wenn die Flüssigkeit im Behälter 11 den Sollstand S erreicht hat, dann nimmt die Flüssigkeit im Behälter 11 ein fest vorgegebenes Volumen ein.

Nach einem bevorzugten Ausführungsbeispiel ist der Programmablauf beim erfindungsgemäßen Verfahren wie folgt:

Zunächst wird das Gewicht $G_{fl}$ der aus dem Vorratsbehälter 19 in den Behälter 11 eingefüllten Meßflüssigkeit beim SollFlüssigkeitsstand S ermittelt, und zwar ohne daß sich im Behälter 11 noch etwas anderes als die Meßflüssigkeit befindet. Dies kann z. B. dadurch geschehen, daß zunächst das Gewicht des leeren Behälters 11 bestimmt und dann durch Öffnen des Magnetventils 16 Meßflüssigkeit aus dem Vorratsbehälter 19 bis zum Flüssigkeitssollstand S in den Behälter 11 eingefüllt wird. Bei Erreichen des Flüssigkeitssollstands S meldet dies der Flüssigkeitsstandsschalter 18 an die Steuerelektronik 12, welche daraufhin augenblicklich das Magnetventil 16 schließt, so daß ein definiertes Flüssigkeitsvolumen sich im Behälter 11 befindet. Durch Differenzbildung kann so das Gewicht $G_{fl}$ der im Behälter 11 befindlichen Flüssigkeit errechnet werden.

Anschließend werden dann in den leeren und trokkenen Behälter 11 eine oder mehrere Akkumulator-Elektrodenplatten aus der laufenden Produktion eingelegt und trocken gewogen. Das Trockengewicht $G_c$ wird in der Steuerelektronik 12 gespeichert, welche z. B. auch durch einen Mikroprozessor realisiert sein kann.

Danach wird im zweiten Arbeitstakt der Behälter 11 durch Öffnen des Magnetventils 16 bis zum Flüssigkeitssollstand S mit Meßflüssigkeit aus dem Vorratsbehälter 19 gefüllt. Bis die aktive Masse der Elektrodenplatten die durch das Porenvolumen definierte Flüssigkeitsmenge aufgesaugt hat, vergeht einige Zeit. In dieser Zeit muß immer wieder Flüssigkeit aus dem Vorratsbehälter 19 zur Aufrechterhaltung des Flüssigkeitssollstandes S nachgefüllt werden. Dieses Auffüllen kann taktweise oder auch mit einem Schlage nach dem vollen Ausfüllen des Porenvolumens erfolgen.

Die Zeit bis zur vollständigen Füllung der Poren mit der Flüssigkeit hängt ab von der Porenstruktur der aktiven Masse. Unterschiedliche Porenstrukturen werden daher unterschiedliche Füllgeschwindigkeiten ergeben. Dies kann meßtechnisch dadurch erfaßt werden, daß man eine Messung der Porenstruktur schon deutlich vor der vollständigen Sättigung der Poren mit Flüssigkeit durchführt, indem man das Gewicht $G_d$ des Behälterinhalts 11 beim Sollflüssigkeitsstand S zu einer definierten kurzen Zeit nach dem Eintauchen der trockenen Elektrodenplatte in die Flüssigkeit bestimmt und daraus in der weiter unten beschriebenen Weise eine scheinbare Kurzzeitporosität $P'_0$ bestimmt.

Nachdem davon ausgegangen werden kann, daß das Porenvolumen der aktiven Masse mit der Meßflüssigkeit soweit ausgefüllt ist, wie das möglich ist, wird das Gewicht $G_a$ des Behälterinhalts 11 mit den darin angeordneten Elektrodenplatten und der bis zum Flüssigkeitssollstand S stehenden Flüssigkeit gemessen und von der Steuerelektronik 12 registriert und gespeichert.

Sobald dies geschehen ist, wird im nächsten Arbeitstakt das Magnetventil 17 von der Steuerelektronik 12 geöffnet und die Meßflüssigkeit aus dem Behälter 11 vollständig in den Sammelbehälter 20 abgelassen. Danach wird das Gewicht $G_b$ des jetzt nur noch die nassen Elektrodenplatten enthaltenden, ansonsten aber von Flüssigkeit entleerten Behälterinhalts 11 bestimmt und in der Steuerelektronik 12 gespeichert.

In der Steuerelektronik sind außerdem die Werte der Plattenfläche F, des Gittergewichts $G_g$, des Gittervolumens $V_g$ und die Dichte $\rho$ der Meßflüssigkeit gespeichert. Diese Werte können vor Ausführung des erfindungsgemäßen Verfahrens durch eine geeignete Eingabevorrichtung 26 in die Steuerelektronik 12 eingegeben werden.

Die Steuerelektronik 12 berechnet nun aufgrund in ihr vorhandener geeigneter Rechenwerke oder Software aus den folgenden Formeln einen oder mehrere der folgenden physikalischen Plattenparameter:

1. Wahre Plattendicke $P_d$:

$$\frac{G_{fl} - (G_a - G_b)}{\rho \cdot F}$$

2. Scheinbare Dichte $D_s$ der aktiven Masse:

$$\frac{G_c - G_g}{\dfrac{G_{fl} - (G_a - G_b)}{\rho} - V_g}$$

3. Porenvolumen $P_v$:

$$\frac{G_b - G_c}{\rho}$$

4. Wahre Dichte $D_w$ der aktiven Masse:

$$\frac{G_c - G_g}{\dfrac{G_{fl} - (G_a - G_b) - (G_b - G_c)}{\rho} - V_g}$$

5. Porosität $P_o$ :

$$\frac{\dfrac{G_b - G_c}{\rho}}{\dfrac{G_{fl} - (G_a - G_b)}{\rho} - V_g}$$

6. Porenfüllung:

$$\frac{P'_0}{P_0}$$

$P'_0$ ist dabei die nach einer kurzen Zeit, wo die Poren erst zu einem Teil mit Flüssigkeit gefüllt sind, bestimmte scheinbare Kurzzeitporosität, zu deren Bestimmung eine Wägung des Behälters 11 mit der erst teilweise mit der Flüssigkeit ausgefüllten Elektrodenplatte bei dem Soll-Flüssigkeitsstand S durchgeführt und das entsprechende Gewicht $G_d$ bestimmt wird. Zur Ermittlung der Kurzzeitporosität $P'_0$ wird in der Formel 5. das Gewicht $G_a$ durch $G_d$ ersetzt.

Die entsprechenden Rechenstufen in der Steuerelektronik 12 sind in Figur 1 bei 1,2,3,4,5 bzw. 6 angedeutet.

Die Ausgangsleitung 25 der Steuerelektronik 12 kann zur Übertragung der einzelnen Parametersignale mehradrig sein. Die Übertragung kann aber auch nach dem Multiplexverfahren zeitlich nacheinander erfolgen.

In der Steuerelektronik 12 können auch die Sollwerte der mechanischen Parameter 1, 2, 3, 4 bzw. 5 gespeichert sein und mit den dort ermittelten Istwerten verglichen werden. Je nachdem, ob die Istwerte von den Sollwerten abweichen, können dann entsprechende Steuersignale über die Ausgangsleitung 25 zu den einzelnen Fertigungsstufen übermittelt werden, um dort Veränderungen bei der Fertigung vorzunehmen, die zu einer Annäherung der Istwerte an die Sollwerte führen.

Im folgenden wird ein praktisches Beispiel für die Bestimmung der mechanischen Parameter gegeben:

Es wurden formierte positive Elektrodenplatten mit Bleigitter und $PbO_2$ als aktive Masse eines Rekombinationsakkumulators mit Glasvliesseparator mit folgenden Abmessungen verwendet:

| Plattenfläche F | 150 cm$^3$ |
|---|---|
| Gittergewicht $G_g$ | 119 g |
| Gittervolumen $V_g$ | 11 cm$^3$ |

Als Messflüssigkeit wurde Wasser verwendet, so daß die Dichte $\rho$ mit 1 angenommen werden konnte.

Diese Werte wurden durch die Eingabevorrichtung 26 in die Steuerelektronik 12 eingegeben.

Anschließend wurden dann die verschiedenen Gewichte mittels der Waage 13 wie folgt ermittelt und in der Steuerelektronik 12 gespeichert:

$G_{fl}$ = 1045 g
$G_c$ = 257 g
$G_a$ = 1276 g
$G_b$ = 276 g
$G_d$ = 1273 g

Durch Einsetzen in die vorgenannten Formeln 1, 2, 3, 4 bzw. 5 ergeben sich dann folgende Werte, die von der Steuerelektronik 12 ermittelt werden:

Wahre Plattendicke $P_d$: 0,30 cm

Eine Vergleichsmessung mit einer Schieblehre ergab einen Wert von 0,32 cm.

Scheinbare Dichte $D_s$: 4,06 g/cm$^3$

Porenvolumen $P_v$: 19,0 cm$^3$

Wahre Dichte $D_w$: 9,20 g/cm$^3$

Porosität $P_o$: 56 %. $P'_0$: 51 %
$P'_0/P_0 = 0,91$

Der als wahre Dichte ermittelte Wert von 9,20 g/cm$^3$ weicht vom Literaturwert des $PbO_2$ mit 9,40 g/cm$^3$ ab, weil ca. 2 % $PbSO_4$ enthalten sind und weil im $PbO_2$ verschlossene, für die Meßflüssigkeit nicht erreichbare Poren vorliegen. Auch die theoretische Porosität weicht mit 58 % von der gemessenen Porosität ab, wobei die gemessene Porosität den realen, für die Schwefelsäure erreichbaren Wert entspricht. Der Vorteil des erfindungsgemäßen Verfahrens besteht also darin, daß er die tatsächliche und nicht die theoretische Aufnahmefähigkeit der aktiven Masse für den Elektrolyten ermittelt.

Die Vorteile bei der Anwendung des erfindungsgemäßen Verfahrens und der erfindungsgemäßen Vorrichtung liegen neben der einfachen Handhabung vor allem in der hohen Flexibilität. Dadurch, daß die Akkumulator-Elektrodenplatten zerstörungsfrei geprüft werden, kann im Bedarfsfall die Anzahl der Prüflinge in starkem Maße variiert werden. Auch die Dauer des Prüfungprogramms kann verändert werden, je nachdem, welche der Informationen über die zu untersuchenden Elektrodenplatten besonders wichtig sind. So genügt beispielsweise ein sehr kurzer Programmablauf, wenn nur die wahre Plattendicke ermittelt werden soll.

Weiter können die Akkumulator-Elektrodenplatten aus unterschiedlichen Fertigungsschritten zur Prüfung herangezogen werden. So ist es möglich, die wahre Plattendicke unmittelbar nach dem Pastieren oder dem Vortrocknen zu bestimmen. Porenstrukturuntersuchungen der aktiven Masse und Ermittlung der Plattendicke sind sowohl nach Reifung und Trocknung als auch nach der Formation von positiven und negativen Eletrodenplatten möglich. Die im geringen Umfang ablaufenden Reaktionen der Meßflüssigkeit mit der negativen Masse haben auf die Genauigkeit der Meßmethode keinen Einfluß.

**Patentansprüche**

1. Verfahren zur Bestimmung wenigstens eines physikalischen Parameters, wie der wahren Plattendikke ($P_d$), der Scheindichte ($D_s$) der aktiven Masse, der wahren Dichte ($D_w$) der aktiven Masse, des Porenvolumens ($P_v$) und/oder der Porosität ($P_o$) der aktiven Masse und/oder der Porenstruktur, von eine bestimmte Fläche (F) aufweisenden Akkumulator-Elektrodenplatten, welche aus einem vorzugsweise aus Blei oder Bleilegierung bestehenden Metallgitter bestimmten Gewichts ($G_g$) und Volumens ($V_g$) und einer daran angeordneten, porösen aktiven Masse hergestellt und zum Arbeiten innerhalb eines Elektrolyten, wie Schwefelsäure, bestimmt sind,
wobei

a) das Gewicht ($G_{fl}$) einer bis zu einem vor bestimmten Flüssigkeitsstand (S) in einem Behälter (11) befindlichen Flüssigkeit vorbekannter Dichte ($\rho$) bestimmt wird,

b) die Elektrodenplatte in die in dem Behälter (11) angeordnete Flüssigkeit vollständig eingetaucht wird,

c) der vorbestimmte Flüssigkeitsstand (S) im Behälter (11) bei eingetauchter und mit Flüssigkeit vollgesaugter Elektrodenplatte eingestellt wird,

d) in diesem Zustand das Gewicht ($G_a$) des Behälterinhalts (11) bestimmt wird,

e) die Flüssigkeit aus dem Behälter (11) abgelassen wird, so daß sich nur noch die flüssigkeitsgetränkte Elektrodenplatte darin befindet,

f) in diesem Zustand das Gewicht ($G_b$) des Behälterinhalts bestimmt wird,

g) die Differenz ($G_a - G_b$) des in Schritt d) bestimmten Gewichtes ($G_a$) und des im Schritt f) bestimmten Gewichtes ($G_b$) gebildet wird,

h) die Differenz ($G_{fl} - (G_a - G_b)$) des gemäß Schritt a) bestimmten Gewichtes ($G_{fl}$) und der Differenz gemäß Schritt g) gebildet wird, welche das Gewicht ($G_{fp}$) einer gedanklich an die Stelle der Elektrodenplatte gesetzten Platte gleicher Fläche (F) und gleicher Flüssigkeitsverdrängung mit der Dichte ($\rho$) der Meßflüssigkeit darstellt, und

i) das so gebildete Gewicht ($G_{fp}$) für die Bestimmung des physikalischen Parameters verwendet wird.

2. Verfahren nach Anspruch 1 dadurch **gekennzeichnet,**
daß eine trockene Elektrodenplatte in eine in die Poren der aktiven Masse eindringende Flüssigkeit vorzugsweise vollständig eingetaucht und dann gewartet wird, bis zumindest im wesentlichen eine Sättigung der Flüssigkeitsaufnahme in den Poren der aktiven Masse erreicht ist und daß dann und ggf. auch schon während des Einsaugens von Flüssigkeit kontinuierlich oder in einem oder mehreren Schritten Flüssigkeit hinzugefügt oder abgelassen wird, bis der vorbestimmte Flüssigkeitsstand (S) erreicht ist.

3. Verfahren nach Anspruch 1 oder 2,
dadurch **gekennzeichnet,**
daß das Gewicht ($G_{FP}$) gemäß Schritt h) durch die Dichte ($\rho$) der Flüssigkeit und die Fläche (F) der Elektrodenplatte dividiert und so die wahren Plattendicke ($P_d$) gebildet wird.

4. Verfahren nach einem der vorhergehenden Ansprüche,
dadurch **gekennzeichnet,**
daß die Elektrodenplatte vor dem Schritt a) in trockenem Zustand in den leeren Behälter (11) eingebracht und dann das Trockengewicht ($G_c$) des Behälterinhalts (11) bestimmt wird.

**5.** Verfahren nach Anspruch 4,
dadurch **gekennzeichnet,**
daß die Differenz des Trockengewichtes ($G_c$) und des Gittergewichtes ($G_g$) gebildet und durch die Differenz des durch die Dichte ($\rho$) der Flüssigkeit geteilten Gewichtes ($G_{FP}$) gemäß Schritt h) und des Gittervolumens ($V_g$) dividiert wird, um so die Scheindichte ($D_s$) der Masse zu erhalten.

**6.** Verfahren, nach Anspruch 5,
dadurch **gekennzeichnet,**
daß die durch die Dichte ($\rho$) der Flüssigkeit geteilte Differenz des Gewichtes ($G_b$) gemäß Schritt f) und des Gewichtes ($G_c$) gemäß Anspruch 4 als Porenvolumen ($P_v$) gebildet wird.

**7.** Verfahren nach Anspruch 6,
dadurch **gekennzeichnet,**
daß das Porenvolumen ($P_v$) zusätzlich von dem im Anspruch 5 definierten durch die Dichte ($\rho$) der Flüssigkeit geteilten Gewicht ($G_{FP}$) gemäß Schritt h) abgezogen wird, um die wahre Dichte ($D_w$) der Masse zu erhalten.

**8.** Verfahren nach Anspruch 6,
dadurch **gekennzeichnet,**
daß das Porenvolumen ($P_v$) durch die Differenz des durch die Dichte ($\rho$) der Flüssigkeit geteilten Gewichtes ($G_{FP}$) gemäß Schritt h) und des Gittervolumens ($V_g$) dividiert wird, um so die Porosität ($P_o$) zu erhalten.

**9.** Verfahren nach einem der Ansprüche 2 bis 8,
dadurch **gekennzeichnet,**
daß das Gewicht ($G_d$) des Behälterinhalts (11) auch eine so kurze Zeit nach dem Eintauchen einer trocknen Elektrodenplatte in die Flüssigkeit bei dem durch Hinzufügen oder Ablassen von Flüssigkeit eingestellten Sollflüssigkeitsstand (S) bestimmt wird, daß die Poren der aktiven Masse erst teilweise mit Flüssigkeit gefüllt sind und daß aus diesem Gewicht ($G_d$) analog Anspruch 8 eine scheinbare Kurzzeitporosität ($P'_0$) ermittelt wird und daß beispielsweise durch Bildung des Quotienten von Kurzzeit- und Endporosität ($P'_0/P_0$) ein für die Porenstruktur charakteristischer Parameter gewonnen wird.

**10.** Verfahren nach einem der vorhergehenden Ansprüche,
dadurch **gekennzeichnet,**
daß die einzelnen Verfahrensschritte von einer Steuerelektronik (12) ausgeführt werden.

**11.** Verfahren nach einem der vorhergehenden Ansprüche,
dadurch **gekennzeichnet,**
daß die verwendete Flüssigkeit dem Elektrolyten des Akkumulators physikalisch und/oder chemisch ähnlich ist.

**12.** Verfahren nach Anspruch 11,
dadurch **gekennzeichnet,**
daß bei Verwendung von Schwefelsäure als Elektrolyt die Flüssigkeit eine wässrige Sulfatlösung ist.

**13.** Verfahren nach einem der vorhergehenden Ansprüche,
dadurch **gekennzeichnet,**
daß es bei Elektrodenplatten für vliesgebundene, rekombinationsfähige Blei-Schwefelsäure-Akkumulatoren verwendet wird.

**14.** Verfahren nach einem der vorhergehenden Ansprüche,
dadurch **gekennzeichnet,**
daß der bzw. die erhaltenen Parameter zur Kontrolle und Korrektur der Fertigungsparameter bei einem Akkumulator-Herstellungsprozeß eingesetzt werden.

**15.** Vorrichtung, welche zur Ausführung des Verfahrens nach einem der vorhergehenden Ansprüche ausgelegt ist,
wobei ein Behälter (11) auf einer Waage (13) angeordnet ist, deren Gewichtsmeßwert an eine Steuerelektronik (12) angelegt ist, am Behälter (11) ein Flüssigkeitszu- und -ablauf (14 bzw. 15) vorgesehen sind, die durch von der Steuerelektronik (12) beaufschlagte Ventile (16, 17) wahlweise Flüssigkeit in den Behälter (11) ein- bzw. aus ihm ablassen können, und am Behälter (11) ein auf einen vorbestimmten Flüssigkeitsstand (S) ansprechender Flüssigkeitsstandschalter (18) angeordnet ist, der ebenfalls an die Steuerelektronik (12) angeschlossen ist.

**Claims**

**1.** Method for determining at least one physical parameter, such as the true plate thickness ($P_d$), the apparent density ($D_s$) of the active material, the true density ($D_w$) of the active material, the pore volume ($P_v$) and/or the porosity ($P_o$) of the active material and/or the pore structure of accumulator electrode plates having a specific area (F) which comprise a metal grid preferably made of lead or lead alloy, having a weight ($G_g$) and volume ($V_g$), and a porous active material arranged thereon, and which are designed for functioning in an electrolyte such as sulphuric acid, characterised in that

a) the weight ($G_{fl}$) of a liquid having a previously known density ($\rho$) is determined which is present in a container (11) up to a particular liquid level (S),

b) the electrode plate is completely immersed into the liquid arranged in the container (11),

c) the predetermined liquid level (S) in the container (11) is adjusted when the immersed electrode plate is fully saturated with liquid,

d) the weight $(G_a)$ of the contents of the container (11) is determined in this state,

e) the liquid is let out of the container (11) so that only the liquid impregnated electrode plate remains therein,

f) the weight $(G_b)$ of the contents of the container is determined in this state,

g) the difference $(G_a - Gb)$ of the weight $(G_a)$ determined in step d) and of the weight $(G_b)$ determined in step f) is calculated,

h) the difference $(G_{fl} - (G_a - Gb))$ of the weight $(G_a)$ determined from step a) and of the difference from step g) is formed, which represents the weight $(G_{fp})$ of a plate of the same area (F) and the same liquid displacement with the density $(\rho)$ of the measurement liquid, when conceptionally set in place of the electrode plate, and

i) the so formed weight $(G_{fp})$ is used for the determination of the physical parameter.

2. Method in accordance with claim 1, characterised in that a dry electrode plate is immersed into the liquid, preferably completely, said liquid penetrating into the pores of the active material, one then waits until at least a substantial saturation of the liquid take up into the pores of the active material is achieved, and in that subsequently, and optionally already during the sucking up of liquid, liquid is added or let out continuously or in one or more steps until the predetermined liquid level (S) is attained.

3. Method in accordance with claim 1 or 2, characterised in that the weight $(G_{FP})$ from step h) is divided by the density $(\rho)$ of the liquid and the area (F) of the electrode plate in order to calculate the true plate thickness $(P_d)$.

4. Method in accordance with one of the preceding claims, characterised in that the electrode plate is introduced into the empty container (11) in a dry state prior to the step a), and the dry weight $(G_c)$ of the contents of the container (11) is then determined.

5. Method in accordance with claim 4, characterised in that the difference between the dry weight $(G_c)$ and the weight of the grid (Gg) is formed, and is divided by the difference between the weight $(G_{FP})$ from step h) divided by the density $(\rho)$ of the liquid and the grid volume $(V_g)$ in order to obtain the apparent density $(D_s)$ of the material.

6. Method in accordance with claim 5, characterised in that the difference between the weight $(G_b)$ from step f) and the weight $(G_c)$ from claim 4 divided by the density $(\rho)$ of the liquid is formed as the pore volume $(P_v)$.

7. Method in accordance with claim 6, characterised in that, the pore volume $(P_v)$ is additionally taken away from the weight $(G_{FP})$ from step h) defined in claim 5 divided by the density $(\rho)$ of the liquid in order to obtain the true density $(D_w)$ of the material.

8. Method in accordance with claim 6, characterised in that the pore volume $(P_v)$ is calculated from the difference between the weight $(G_{FP})$ from step h) divided by the density $(\rho)$ of the liquid and the grid volume $(V_g)$ in order to obtain the porosity $(P_o)$.

9. Method in accordance with one of the claims 2 to 8, characterised in that the weight $(G_d)$ of the contents of the container (11) is also determined a sufficiently short time after the immersion of a dry electrode plate into the liquid at the desired liquid level (S) which is arrived at by adding or removing liquid, that the pores of the active material are initially partially filled with liquid; in that an apparent short term porosity $(P'_o)$ is determined from this weight $(G_d)$ analogous to claim 8, and in that a parameter is obtained which is characteristic of the pore structure, for instance by calculating the quotient of the short term porosity and the final porosity $(P'_o/P_o)$.

10. Method in accordance with one of the preceding claims, characterised in that the individual method steps are implemented by an electronic control system (12).

11. Method in accordance with one of the preceding claims, characterised in that the liquid used is physically and/or chemically similar to the electrolyte of the accumulator.

**12.** Method in accordance with claim 11,
characterised in that,
when sulphuric acid is used as the electrolyte, the
liquid is an aqueous sulphate solution.

**13.** Method in accordance with one of the preceding
claims,
characterised in that
the method is used for electrode plates for fleece-
bound, recombinable lead-sulphuric acid accumulators.

**14.** Method in accordance with one of the preceding
claims,
characterised in that
the parameter or parameters obtained for control
and correction of the production parameters are
employed in an accumulator manufacturing process.

**15.** Apparatus which is laid out for the implementation
of the method in accordance with one of the preceding claims, wherein a container (11) is arranged on
a weigher (13), the weight measurement value from
which is supplied to an electronic control system
(12), wherein a liquid supply means (14) and a liquid
removal means (15) are provided at the container
(11) which can let liquid into or out of the container
(11) respectively as desired via respective valves
(16, 17) actuated by the electronic control system
(12), and wherein a liquid level switch (18) is arranged at the container (11) which is responsive to
a predetermined liquid level (S) and which is also
connected to the electronic control system (12).

**Revendications**

**1.** Procédé pour déterminer au moins un paramètre
physique, tel que l'épaisseur de plaque réelle ($P_d$),
la densité apparente ($D_s$) de la masse active, la
densité réelle ($D_w$) de la masse active, le volume
poreux ($P_v$) et/ou la porosité ($P_o$) de la masse active
et/ou de la structure poreuse de plaques d'électrode
d'accumulateur qui présentent une certaine surface
(F), qui sont réalisées par une grille métallique
constituée de préférence en plomb ou en alliage de
plomb avec un poids déterminé ($G_g$) et un volume
déterminé ($V_g$) et par une masse active poreuse
agencée sur ladite grille, et qui sont destinées au
fonctionnement à l'intérieur d'un électrolyte, tel que
de l'acide sulfurique, dans lequel :

a) on détermine le poids ($G_{fl}$) d'un liquide de
densité connue ($\rho$) rempli jusqu'à un niveau
prédéterminé (S) dans un récipient (11),
b) on plonge entièrement la plaque d'électrode
dans le liquide agencé dans le récipient (11),

c) on règle le niveau prédéterminé (S) dans le
récipient (11) lorsque la plaque d'électrode est
immergée et saturée de liquide,
d) on détermine dans cet état le poids ($G_a$) du
contenu du récipient (11),
e) on fait sortir le liquide hors du récipient (11),
de sorte que seule la plaque d'électrode imbibée de liquide se trouve encore dans ledit récipient,
f) on détermine dans cet état le poids ($G_b$) du
contenu de récipient,
g) on forme la différence ($G_a$ - $G_b$) entre le poids
($G_a$) déterminé dans l'étape d) et le poids ($G_b$)
déterminé dans l'étape f),
h) on forme la différence ($G_{fl}$ - ($G_a$ - $G_b$)) entre
le poids ($G_{fl}$) déterminé dans l'étape a) et la différence selon l'étape g), qui représente le poids
($G_{fp}$) d'une plaque qui est posée de façon imaginaire à l'emplacement de la plaque d'électrode et qui présente la même surface (F) et le
même refoulement de liquide que le liquide me-
suré avec la densité ($\rho$), et
i) on utilise le poids ($G_{fp}$) ainsi formé pour déterminer le paramètre physique.

**2.** Procédé selon la revendication 1, caractérisé en ce
que l'on plonge de préférence entièrement une plaque d'électrode sèche dans un liquide pénétrant
dans les pores de la masse active, et en ce que l'on
attend ensuite jusqu'à atteindre du moins sensiblement une saturation de l'absorption de liquide dans
les pores de la masse active, et en ce que l'on ajoute
ou l'on fait sortir du liquide, ensuite ou le cas
échéant déjà pendant l'absorption du liquide, en
continu ou en une ou plusieurs étapes, jusqu'à atteindre le niveau prédéterminé (S).

**3.** Procédé selon l'une ou l'autre des revendications 1
et 2, caractérisé en ce que l'on divise le poids ($G_{FP}$)
selon l'étape h) par la densité ($\rho$) du liquide et par
la surface (F) de la plaque d'électrode, et en ce que
l'on forme ainsi l'épaisseur de plaque réelle ($P_d$).

**4.** Procédé selon l'une quelconque des revendications
précédentes, caractérisé en ce que l'on introduit la
plaque d'électrode avant l'étape a) dans un état sec
dans le récipient vide (11), et en ce que l'on détermine alors le poids à sec ($G_c$) du contenu du récipient (11).

**5.** Procédé selon la revendication 4, caractérisé en ce
que l'on forme la différence entre le poids à sec ($G_c$)
et le poids de grille ($G_g$), et en ce qu'on la divise par
la différence entre le poids ($G_{FP}$) divisé par la densité ($\rho$) du liquide selon l'étape h) et le volume de
grille ($V_g$), afin d'obtenir ainsi la densité apparente
($D_s$) de la masse.

**6.** Procédé selon la revendication 5, caractérisé en ce que l'on forme en tant que volume poreux ($P_v$) la différence entre le poids ($G_b$) divisé par la densité ($\rho$) du liquide selon l'étape f) et le poids ($G_c$) selon la revendication 4.

**7.** Procédé selon la revendication 6, caractérisé en ce que l'on soustrait le volume poreux ($P_v$) en supplément du poids ($G_{PF}$) défini dans la revendication 5 et divisé par la densité (p) du liquide selon l'étape h), afin d'obtenir la densité réelle ($D_w$) de la masse.

**8.** Procédé selon la revendication 6, caractérisé en ce que l'on divise le volume poreux ($P_v$) par la différence entre le poids ($G_{FP}$) divisé par la densité ($\rho$) du liquide selon l'étape h) et le volume de grille ($V_g$), afin d'obtenir ainsi la porosité ($P_o$).

**9.** Procédé selon l'une quelconque des revendications 2 à 8, caractérisé en ce que l'on détermine le poids ($G_d$) du contenu du récipient (11) après avoir plongé une plaque d'électrode sèche dans le liquide au niveau de consigne (S) réglé par addition ou évacuation de liquide, après un temps aussi court que les pores de la masse active sont tout d'abord remplies partiellement avec le liquide, et que l'on détermine une porosité temporaire apparente ($P'_o$) à partir de ce poids ($G_d$) de manière analogue à la revendication 8, et que l'on obtient par exemple par formation du quotient de la porosité temporaire et de la porosité finale ($P'_o/P_o$) un paramètre caractéristique pour la structure poreuse.

**10.** Procédé selon l'une quelconque des revendications précédentes, caractérisé en ce que les étapes opérationnelles individuelles sont effectuées par une électronique de commande (12).

**11.** Procédé selon l'une quelconque des revendications précédentes, caractérisé en ce que sur le plan physique et/ou chimique, le liquide utilisé est similaire à l'électrolyte de l'accumulateur.

**12.** Procédé selon la revendication 11, caractérisé en ce que lors de l'utilisation d'acide sulfurique en tant qu'électrolyte, le liquide est une solution de sulfate aqueuse.

**13.** Procédé selon l'une quelconque des revendications précédentes, caractérisé en ce que l'on applique le procédé dans le cas des plaques d'électrode pour des accumulateurs à acide sulfurique/plomb liés en nappe et aptes à être recombinés.

**14.** Procédé selon l'une quelconque des revendications précédentes, caractérisé en ce que l'on utilise le ou les paramètres obtenus pour contrôler et corriger les paramètres de fabrication dans un processus de fabrication d'accumulateur.

**15.** Appareil conçu pour la mise en oeuvre du procédé selon l'une quelconque des revendications précédentes, dans lequel est agencé un récipient (11) sur une balance (13), dont la valeur mesurée du poids est appliquée à une électronique de commande (12), dans lequel sont prévues une conduite d'amenée et une conduite d'évacuation (14 et 15) sur le récipient (11), lesquelles peuvent faire entrer ou évacuer au choix du liquide dans ou hors du récipient (11) via des vannes (16, 17) commandées par l'électronique de commande (12), et dans lequel un interrupteur de niveau (18) est agencé sur le récipient (11), qui réagit à un niveau de liquide prédéterminé et qui est également branché à l'électronique de commande (12).

# Fig.1